(19)

Europäisches
Patentamt
European
Patent Office
Office européen
des brevets

(11) **EP 3 427 819 A1**

(12) **EUROPEAN PATENT APPLICATION**
published in accordance with Art. 153(4) EPC

(43) Date of publication:
**16.01.2019 Bulletin 2019/03**

(51) Int Cl.:
***B01J 20/281*** *(2006.01)*    ***B01D 15/38*** *(2006.01)*
***B01J 20/26*** *(2006.01)*    ***G01N 30/88*** *(2006.01)*

(21) Application number: **17763437.5**

(22) Date of filing: **10.03.2017**

(86) International application number:
**PCT/JP2017/009768**

(87) International publication number:
**WO 2017/155105 (14.09.2017 Gazette 2017/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.03.2016 JP 2016048553**

(71) Applicant: **Hitachi Chemical Co., Ltd.
Chiyoda-ku
Tokyo 100-6606 (JP)**

(72) Inventors:
• **WATANABE, Masaru
Tokyo 100-6606 (JP)**
• **KAWAUCHI, Fumihiko
Tokyo 100-6606 (JP)**

• **KAWAGUCHI, Akiko
Tokyo 100-6606 (JP)**
• **GOTOH, Akihito
Tokyo 100-6606 (JP)**
• **YASUE, Ken
Tokyo 100-6606 (JP)**
• **MIYAZAWA, Emi
Tokyo 100-6606 (JP)**
• **GOTOH, Yasushi
Tokyo 100-6606 (JP)**
• **BUTSUGAN, Michio
Hitachi-shi
Ibaraki 317-8555 (JP)**

(74) Representative: **Hoffmann Eitle
Patent- und Rechtsanwälte PartmbB
Arabellastraße 30
81925 München (DE)**

(54) **SEPARATION MATERIAL, COLUMN PROVIDED WITH SAID SEPARATION MATERIAL, AND METHOD FOR PRODUCING SEPARATION MATERIAL**

(57)    Disclosed is a separation material comprising: a porous polymer particle containing a crosslinked polymer containing a structural unit derived from a crosslinkable monomer having an aromatic group and two or more vinyl groups bonded to the aromatic group; and a coating layer coating at least part of the surface of the porous polymer. The coating layer contains a first graft chain that is a polymer having a hydroxyl group bonded to the crosslinked polymer, and a second graft chain that is a polymer having a hydroxyl group, bonded to the first graft chain, and being different from the first graft chain.

**EP 3 427 819 A1**

## Description

## Technical Field

The present invention relates to a separation material, a column provided with the separation material, and a method for producing the separation material.

## Background Art

For separating and purifying a biological polymer represented by protein, porous particles which have a synthetic polymer as a base material, or particles which have crosslinked gel of a hydrophilic natural polymer as a base material have been conventionally used.

In the case of an ion exchanger which has a porous synthetic polymer as a base material, there is an advantage that volume change caused by salt concentration is small and pressure resistance under permeation of liquid is favorable when it is filled in a column and used for chromatography. However, the ion exchanger has a problem that, for separation of a protein or the like, non-specific adsorption like irreversible adsorption based on hydrophobic interaction occurs so that non-symmetry of peaks occurs, or a protein adsorbed to an ion exchanger by the hydrophobic interaction cannot be recovered as it remains adsorbed thereto.

Meanwhile, in the case of an ion exchanger which has, as a base material, crosslinked gel of a hydrophilic natural polymer represented by polysaccharides such as dextran and agarose, there is an advantage that non-specific adsorption of a protein is almost absent. However, as this ion exchanger undergoes significant swelling in aqueous solution, it has disadvantages that volume change caused by ionic strength of a solution and volume change between free acid form and load form are high, and the mechanical strength is not sufficient. In particular, in a case in which the crosslinked gel is used for chromatography, there is a disadvantage that pressure loss is high during permeation of liquid and gel is consolidated by permeation of liquid.

To overcome the disadvantages possessed by the crosslinked gel of a hydrophilic natural polymer, an attempt of combining it with a stiff material as a so-called "skeleton" has been made. For example, in US Patent No. 4,965,289, a composite having gel like natural polymer gel supported within pores of a porous polymer is used in the field of peptide synthesis, in which it is described, as the advantageous effect of the invention, that synthesis can be made at high yield by increasing the loading coefficient of a reactive material accordingly. Furthermore, this US patent describes the advantageous effect that, even when it is used in the form of a column bed, there is no volume change and the pressure of flow-through for passing through the column does not change, since the gel is surround with rigid synthetic polymer material. However, the porous polymer of the composite shown in the examples has pore volume of 75% or higher and few parts correspond to so-called "skeleton", and has a disadvantage that the strength is weak. Furthermore, since the composite is not a true sphere and is in ground state, from the viewpoint of fluid dynamics, it is disadvantageous in terms of efficiency in the case of being used for chromatography. In the specific examples, only a synthetic polymer as a gel in pores is described.

In US Patent No. 4,335,017 and US Patent No. 4,336,161, particles in which xerogel like polysaccharides such as dextran and cellulose is retained in an inorganic porous body like celite, and the gel is provided with a diethylaminomethyl (DEAE) group or the like to have a sorption property, are used for removal of hemoglobin. As the advantageous effect thereof, a good liquid permeability via a column is mentioned. However, the inorganic material like celite or the like is generally unstable to alkali, and thus the use conditions are limited. Since celite described as a specific example is amorphous and undergoes a large pressure loss in the case of being used after being filled in a column, it is disadvantageous in terms of chromatography handling.

US Patent No. 3,966,489 describes an ion exchanger of hybrid copolymer in which pores of a copolymer with so-called macro network structure are filled with gel of a crosslinked copolymer synthesized with monomers. Although there are problems like pressure loss, volume change, and the like when the crosslinking degree of the crosslinked copolymer is low, it is mentioned that, as the crosslinked copolymer is a hybrid copolymer, the liquid permeability is improved, the pressure loss is reduced and also the ion exchange volume is enhanced and leakage behavior is improved. However, the copolymer before forming a hybrid copolymer, which is a styrene-divinylbenzene copolymer having high hydrophobicity, has a disadvantage that non-specific adsorption occurs in the case where it is used for separation of a biological polymer like protein.

A composited filler in which crosslinked gel of a hydrophilic natural polymer with large fishnet structure is filled in pores of an organic synthetic polymer base body, is suggested (see, Japanese Unexamined Patent Publication No. HI-254247 and US Patent No. 5,114,577). The crosslinked gel suggested for the filler has no ion exchange group and is used for gel permeation chromatography utilizing the molecular sieve effect. Due to such reasons, in the case of protein separation or the like, the separation of ones with almost the same molecular weight was insufficient.

In Japanese Unexamined Patent Publication No. 2009-244067, porous particles constituted with glycidyl methacrylate and acrylic crosslinked monomer are synthesized.

**Citation List**

**Patent Literature**

Patent Literature 1: US Patent No. 4,965,289
Patent Literature 2: US Patent No. 4,335,017
Patent Literature 3: US Patent No. 4,336,161
Patent Literature 4: US Patent No. 3,966,489
Patent Literature 5: Japanese Unexamined Patent Publication No. HI-254247
Patent Literature 6: US Patent No. 5,114,577
Patent Literature 7: Japanese Unexamined Patent Publication No. 2009-244067

**Summary of Invention**

**Technical Problem**

An object of the present invention is to provide a separation material which has sufficiently suppressed non-specific adsorption of a biological polymer such as protein and exhibits an excellent liquid permeability and a high adsorption amount even in the case of being used for chromatography after being filled in a column, a column provided with the separation material, and a method for producing the separation material.

**Solution to Problem**

One aspect of the present invention provides a separation material comprising: a porous polymer particle comprising a crosslinked polymer containing a structural unit derived from a crosslinkable monomer having an aromatic group and two or more vinyl groups bonded to the aromatic group; and a coating layer coating at least part of the surface of the porous polymer. The coating layer contains a first graft chain that is a polymer having a hydroxyl group bonded to the crosslinked polymer, and a second graft chain that is a polymer having a hydroxyl group bonded to the first graft chain and being different from the first graft chain.

Since the porous polymer particles formed of a crosslinkable monomer having an aromatic group and a vinyl group (typically, styrene-based monomer) can have high elastic modulus, particle breakage can be suppressed at the time of filling a column or handling the particles. By providing a coating layer containing the first and second graft chains having a hydroxyl group on a surface of the porous polymer particle, it is possible to enhance dramatically the dynamic adsorption amount while suppressing the non-specific adsorption. Advantageous Effects of Invention

The separation material according to one aspect of the present invention can exhibit, in addition to favorable liquid permeability and high adsorption amount, sufficiently low non-specific adsorption. According to several aspects of the present invention, a separation material which has sufficiently low non-specific adsorption caused by hydrophobic interaction and can be used for separation and purification of a biological polymer by electrostatic interaction or affinity purification or the like, while maintaining the excellent separation property for separation of a biological polymer such as protein, can be provided.

**Description of Embodiments**

Hereinbelow, several embodiments of the present invention are described in detail. However, the present invention is not limited to the following embodiments.

The separation material according to an embodiment is comprised of a porous polymer particle and a coating layer which coats at least part of the surface of the porous polymer particle. In the present specification, the "surface of the porous polymer particle" includes not only the external surface of the porous polymer particle but also the surface of pore inside the porous polymer particle.

Porous polymer particle

The porous polymer particle according to an embodiment contains a crosslinked polymer containing a structural unit derived from a crosslinkable monomer having an aromatic group and two or more vinyl groups bonded to the aromatic group. The porous polymer particle can be synthesized by suspension polymerization or the like in a reaction solution containing crosslinkable monomers, porosifying agent, and an aqueous medium, for example. As the crosslinkable monomer, a vinyl monomer like styrene-based monomer can be used, although it is not particularly limited.

Examples of the crosslinkable monomer (or polyfunctional monomer) include a divinyl compound (styrene-based monomer) such as divinylbenzene, divinylbiphenyl, divinylnaphthalene, and divinylphenanthrene. These crosslinkable monomers may be used either singly or in combination of two or more kinds thereof. From the viewpoint of durability, acid resistance, and alkali resistance, use of divinylbenzene is preferable.

A monofunctional monomer may be polymerized with the crosslinkable monomer. Examples of the monofunctional monomer include styrene and a derivative thereof such as styrene, o-methylstyrene, m-methylstyrene, p-methylstyrene, $\alpha$-methylstyrene, o-ethylstyrene, m-ethylstyrene, p-ethylstyrene, 2,4-dimethylstyrene, p-n-butylstyrene, p-t-butylstyrene, p-n-hexylstyrene, p-n-octylstyrene, p-n-nonylstyrene, p-n-decylstyrene, p-n-dodecylstyrene, p-methoxystyrene, p-phenylstyrene, p-chlorostyrene and 3,4-dichlorostyrene. They may be used either singly or in combination of two or more kinds thereof. Styrene, which has acid resistance and alkali resistance, is preferable. A styrene derivative having a functional group such as carboxy group, amino group, hydroxyl group, or aldehyde group can be also used.

As the porosifying agent, an organic solvent that promotes phase separation during polymerization and promotes porosification of the particles is used. Examples of the porosifying agent include aliphatic or aromatic hydrocarbons, esters, ketones, ethers, and alcohols. Specifically, the porosifying agent can be selected, for example, from toluene, xylene, cyclohexane, octane, butyl acetate, dibutyl phthalate, methyl ethyl ketone, dibutyl ether, 1-hexanol, 2-octanol, decanol, lauryl alcohol, and cyclohexanol. They may be used either singly or in combination of two or more kinds thereof.

Amount of the porosifying agent may be 0 to 300% by mass relative to the total amount of the crosslinkable monomer and other monomers. Porosity of the particle can be controlled based on the amount of the porosifying agent. Furthermore, size and shape of the pore can be controlled based on type of the porosifying agent.

In a case in which water used as a solvent is employed as a porosifying agent, it is possible to allow the particles to absorb water to be porosified by dissolving an oil-soluble surfactant in monomer.

Examples of the oil-soluble surfactant which is used for the porosification include sorbitan monoester of branched C16 to C24 fatty acid, chain unsaturated C16 to C22 fatty acid, or chain saturated C12 to C14 fatty acid, for example, sorbitan monooleate and sorbitan monomyristate, and sorbitan monoester derived from palm fatty acid; diglycerol monoester of branched C16 to C24 fatty acid, chain unsaturated C16 to C22 fatty acid, or chain saturated C12 to C14 fatty acid, for example, diglycerol monooleate (for example, diglycerol monoester of C18:1 fatty acid), diglycerol monomyristate, diglycerol monoisostearate, and diglycerol monoester of palm fatty acid; diglycerol monoaliphatic ether of branched C16 to C24 alcohol (for example, guerbet alcohol), chain unsaturated C16 to C22 alcohol, and chain saturated C12 to C14 alcohol (for example, palm fatty alcohol), and a mixture of those emulsifying agents. Preferred examples of the emulsifying agent include sorbitan monolaurate (for example, SPAN (registered trademark) 20, sorbitan monolaurate of which purity is preferably more than 40% approximately, more preferably more than 50% approximately, and most preferably more than 70% approximately), sorbitan monooleate (for example, SPAN (registered trademark), sorbitan monooleate of which purity is preferably more than 40% approximately, more preferably more than 50% approximately, and most preferably more than 70% approximately), diglycerol monooleate (for example, diglycerol monooleate of which purity is preferably more than 40% approximately, more preferably more than 50% approximately, and most preferably more than 70% approximately), diglycerol monoisostearate (for example, diglycerol monoisostearate of which purity is preferably more than 40% approximately, more preferably more than 50% approximately, and most preferably more than 70% approximately), diglycerol monomyristate (sorbitan monomyristate of which purity is preferably more than 40% approximately, more preferably more than 50% approximately, and most preferably more than 70% approximately), cocoyl (for example, lauryl and myristoyl) ether of diglycerol, and a mixture of them.

The emulsifying agent is preferably used within a range of from 5 to 80% by mass relative to the monomer. In a case in which the amount of the emulsifying agent is 5% by mass or more, there is a tendency that, as favorable stability of water drops is yielded, forming of a single large pore is suppressed. In a case in which the amount of the emulsifying agent is 80% by mass or less, there is a tendency that favorable stability of the particle shape after polymerization is obtained.

As the aqueous medium, water, or a mixture medium of water and a water-soluble solvent (for example, lower alcohol) can be mentioned. In the aqueous medium, a surfactant is contained. As the surfactant, any of the anionic, cationic, non-ionic, and zwitterionic surfactants can be used.

Examples of the anionic surfactant include fatty acid oil such as sodium oleate or potassium castor oil, alkyl sulfate ester salt such as sodium lauryl sulfate or ammonium lauryl sulfate, alkylbenzene sulfonate salt such as sodium dodecyl benzenesulfonate, dialkylsulfosuccinate such as alkyl naphthalene sulfonate, alkane sulfonate, or sodium dioctyl sulfosuccinate, alkenyle succinate (dipotassium salt), alkyl phosphoric acid ester salt, naphthalene sulfonic acid formalin condensate, polyoxyethylene alkyl ether sulfate such as polyoxyethylene alkylphenyl ether sulfuric acid ester salt or polyoxyethylene lauryl ether sodium sulfate, and polyoxyethylene alkyl sulfuric acid ester salt.

Examples of the cationic surfactant include alkylamine salt such as laurylamine acetate or stearylamine acetate, and quaternary ammonium salt such as lauryl trimethylammonium chloride.

Examples of the non-ionic surfactant include a hydrocarbon-based non-ionic surfactant such as polyethylene glycol alkyl ethers, polyethylene glycol alkylaryl ethers, polyethylene glycol esters, polyethylene glycol sorbitan esters, polyalkylene glycol alkylamine or amides, polyether modified silicone-based non-ionic surfactant such as polyethylene oxide adducts or polypropylene oxide adducts of silicone, and fluorine-based non-ionic surfactant such as perfluoroalkyl glycols.

Examples of the zwitterionic surfactant include a hydrocarbon surfactant such as lauryl dimethylamine oxide, a phosphoric acid ester-based surfactant, or a phosphorous acid ester-based surfactant.

The surfactant may be used either singly or in combination of two or more kinds thereof. Among the surfactants described above, an anionic surfactant is preferable from the viewpoint of dispersion stability of the monomer during polymerization.

Examples of a polymerization initiator which is added depending on necessity include organic peroxides such as benzoyl peroxide, lauroyl peroxide, benzoyl orthochloro peroxide, benzoyl orthormethoxy peroxide, 3,5,5-trimethylhexanoyl peroxide, tert-butylperoxy-2-ethylhexanoate, or di-tert-butyl peroxide; and an azo-based compound such as 2,2'-azobisisobutyronitrile, 1,1'-azobiscyclohexacarbonitrile, or 2,2'-azobis(2,4-dimethylvaleronitrile). The polymerization initiator can be used within a range of from 0.1 to 7.0 parts by mass relative to 100 parts by mass of the monomer.

The polymerization temperature can be suitably selected depending on type of the monomer and polymerization initiator. The polymerization temperature is preferably 25 to 110°C, and more preferably 50 to 100°C.

To enhance dispersion stability of the particle, a dispersion stabilizer may be added to an emulsion during the polymerization process.

Examples of the dispersion stabilizer include polyvinyl alcohol, polycarbonic acid, celluloses (hydroxyethyl cellulose, carboxymethyl cellulose, methyl cellulose, or the like), and polyvinyl pyrrolidone. An inorganic water-soluble polymer compound like sodium tripolyphosphoric acid can be also used in combination. Among them, polyvinyl alcohol or polyvinyl pyrrolidone is preferable. Addition amount of the dispersion stabilizer is preferably 1 to 10 parts by mass relative to 100 parts by mass of the monomer.

To suppress an occurrence of particles resulting from emulsion polymerization of a monomer only in water, a water-soluble polymerization inhibitor such as nitrites, sulfites, hydroquinones, ascorbic acids, water-soluble vitamin Bs, citric acid, or polyphenols may be used.

The average particle diameter of the porous polymer particle is preferably 500 $\mu$m or less, more preferably 300 $\mu$m or less, and even more preferably 100 $\mu$m or less. The average particle diameter of the porous polymer particle is preferably 10 $\mu$m or more, more preferably 30 $\mu$m or more, and even more preferably 50 $\mu$m or more. As the average particle diameter decreases, there is a possibility that the column pressure after filling a column increases.

Coefficient variation (C.V) of the porous polymer particles or separation material is preferably 5 to 15%, and more preferably 5 to 10%, to enhance the liquid permeability. As a method for reducing the coefficient variation of particle diameter, there is method of having monodispersion by using an emulsifying device like Micro Process Server (Hitachi, Ltd.).

Average particle diameter of the porous polymer particles or separation material or coefficient variation of the particle diameter can be obtained by the following measurement method.

1) Particles are dispersed in water (containing a dispersion agent like surfactant) to prepare a dispersion containing particles at 1% by mass, and

2) Average particle diameter and coefficient variation of the particle diameter are measured from images of 10,000 particles in the dispersion by using a particle size distribution analyzer (Sysmex Flow, manufactured by Sysmex Corporation).

Ratio of the pore volume (porosity) relative to the total volume of the porous polymer particles or separation material (including volume of pore) may be 30% or more and 70% or less. Diameter of most of the pores of the porous polymer may be 0.05 $\mu$m or more and 0.6 $\mu$m or less, that is, micropore. In other words, the mode diameter in the pore size distribution of the porous polymer particles or separation material may be 0.05 to 0.6 $\mu$m. More preferably, the pore volume is 40% or more and 70% or less, and the mode diameter in the pore size distribution is 0.05 $\mu$m or more and less than 0.3 $\mu$m. If the pore size or mode diameter is smaller than that, there is a tendency that materials incapable of entering the pore increase. If the pore size or mode diameter is larger than that, smaller surface area is yielded. They can be adjusted by the aforementioned porosifying agent.

Specific surface area of the porous polymer particle or separation material is preferably 30 m$^2$/g or more. Considering the practical usability, the specific surface area is more preferably 35 m$^2$/g or more, and even more preferably 40 m$^2$/g or more. There is a tendency that a relatively small adsorption amount of a material to be separated is yielded when the specific surface area is small.

The mode diameter in the pore size distribution, specific surface area, and porosity of the porous polymer particle or separation material are the values that are measured by a mercury intrusion porosimeter (Auto Pore: Shimadzu Corporation). They can be measured as described below. A sample of about 0.05 g is collected in a standard 5 cc cell for powder (stem volume: 0.4 cc) and measurement is made at conditions with initial pressure of 21 kPa (about 3 psia, corresponding to about 60 $\mu$m of pore diameter). Mercury parameter was set to have mercury contact angle of 130 degrees and mercury surface tension of 485 dynes/cm as device default. Each value was calculated while being limited to a pore diameter range of 0.05 to 5 $\mu$m.

Coating layer containing polymer having hydroxyl group

By forming a coating layer according to introduction of a polymer having a hydroxyl group as a graft chain to a surface including pore inside of the porous polymer particle, non-specific adsorption can be suppressed, and therefore the dynamic adsorption amount can be increased. Having a thin film as the coating layer can contribute to suppression of an increase in column pressure. Furthermore, a favorable protein adsorption amount is obtained when a functional group is introduced.

A first graft layer contains a first graft chain, which is a polymer having a hydroxyl group bonded to the crosslinked polymer of the porous polymer particles. To prevent effectively the non-specific adsorption, the first graft chain is preferably introduced to a surface of the porous polymer particles by polymerizing a radical polymerizable monomer having a hydroxyl group according to atom transfer radical polymerization (ATRP), which is a living radical polymerization. Namely, the first graft chain is preferably a polymer which contains a structural unit derived from a radical polymerizable monomer having a hydroxyl group. Examples of the radical polymerizable monomer having a hydroxyl group include 2-hydroxyethyl (meth)acrylic acid, 3-hydroxybutyl (meth)acrylic acid, 2-hydroxypropyl (meth)acrylic acid, 2-(2-hydroxyethoxy)ethyl (meth)acrylic acid, 2,3-dihydroxypropyl (meth)acrylic acid, polyethylene glycol (meth)acrylate, N-(2-hydroxyethyl)(meth)acrylamide, and (meth)acrylate having a sugar unit. From the viewpoint of preventing the non-specific adsorption, it is preferable to use a monomer which is soluble in water.

The first graft chain can be formed after introducing an ATRP initiating group on a surface of the porous polymer particles. The method for introducing an ATRP initiating group is not particularly limited, but, in a case in which a double bond remains in the crosslinkable polymer of the porous polymer particles, an ATRP initiating group can be introduced by reacting the double bond with oxalic acid, hydrochloric acid, or the like. When a hydroxyl group is present on a surface of the porous polymer particles, by reacting it with 2-bromopropionyl bromide, an ATRP initiating group can be conveniently introduced. As a convenient method, it is also possible to use a material that is obtained by reacting 2-bromopropionyl bromide with dopamine and form a film on a surface of the porous polymer particles to introduce an ATRP initiating group.

The catalyst used for an ATRP method is not particularly limited, and it can be selected within a wide range from those that are commonly used in the ATRP method. A transition metal complex is generally used. The transition metal complex is not particularly limited, and it can be selected from a wide range. For example, combination can be made after selecting appropriately each of the ligand and transition metal from the ligand group and transition metal group that are exemplified below.

The ligand group consists of, for example, 2,2'-bipyridyl, 4,4'-dimethyl-2,2'-dipyridyl, 4,4'-di-tert-butyl-2,2'-dipyridyl, 4,4'-dinonyl-2,2'-dipyridyl, N-butyl-2-pyridylmethanimine, N-octyl-2-pyridylmethanimine, N-dodecyl-N-(2-pyridylmethylene)amine, N-octadecyl-N-(2-pyridylmethylene)amine, N,N,N,N',N'-pentamethyl-diethylenetriamine, tris(2-pyridylmethyl)amine, 1,1,4,7,10,10-hexamethyltriethylene-tetramine, tris[2-(dimethylamino)ethylamine, 1,4,8,11-tetraazacyclotetra-decane, 1,4,8,11-tetramethyl-1-4-8-11-tetraazacyclotetradecane, and N,N,N'N'-tetrakis(2-pyridylmethyl)-ethylenediamine.

The transition metal group consists of, for example, $CuCl$, $CuCl_2$, $CuBr$, $CuBr_2$, $TiCl_2$, $TiCl_3$, $TiCl_4$, $TiBr_4$, $FeCl_2$, $FeCl_3$, $FeBr_2$, $FeBr_3$, $CoCl_2$, $COBr_2$, $NiCl_2$, $NiBr_2$, $MoCl_3$, $MoCl_5$, and $RuCl_3$. The transition metal complex is preferably a monovalent copper complex. As the monovalent copper complex, CuBr/bipyridyl (bpy) complex may be used, although it is not particularly limited thereto.

In the case of using a solvent for an ATRP method, the solvent is not particularly limited. However, any solvent can be used as long as it is used for free radical polymerization and can homogeneously dissolve the catalyst at certain degree. For example, at least one solvent selected from the group consisting of water, ethers, amides, nitriles, and alcohols can be used, or such solvent can be used in combination with other solvent. Examples of the ethers include diethyl ether, tetrahydrofuran, diphenyl ether, anisole, and dimethoxy benzene, although it is not particularly limited thereto. Examples of the amides include N,N-dimethyl formamide (DMF) and N,N-dimethyl acetamide, although it is not particularly limited thereto. Examples of the nitriles include acetonitrile, propionitrile, and benzonitrile, although it is not particularly limited thereto. Examples of the alcohols include methanol, ethanol, propanol, isopropanol, n-butyl alcohol, t-butyl alcohol, and isoamyl alcohol, although it is not particularly limited thereto. In particular, at least one selected from the group consisting of water, ethers, amides, and alcohols is preferable as a solvent, and water, anisole, or DMF is more preferable as the solvent.

Other solvent which can be combined with the solvent described above is not particularly limited, but it can be an aromatic hydrocarbon solvent or halogenated hydrocarbon, for example. Examples of the aromatic hydrocarbon include, although not particularly limited, benzene and toluene. Examples of the halogenated hydrocarbon include, although not particularly limited, chlorobenzene, methylene chloride, chloroform, and chlorobenzene. In that case, the amount of the polymerization solvent is preferably the same or higher than the molar amount of the initiator.

Graft density $\sigma$ of the first graft chain, which is calculated from the following formula, is preferably 0.1 chain/nm$^2$ or more from the viewpoint of preventing the non-specific adsorption of a protein.

$$\sigma = \text{Coating amount (g/g of particle)/Number average molecular weight Mn} \times \text{Avogadro's number/Specific surface area of particle } (\text{nm}^2/\text{g})$$

The number average molecular weight of a graft chain introduced by living radical can be measured by GPC or the like after hydrolyzing the graft chain with alkali or the like.

A second graft chain constituting the coating layer is a polymer having a hydroxyl group bonded to the first graft chain, with the proviso that, this polymer is a polymer different from the polymer constituting the first graft chain. The layer formed of the second graft chain (second graft layer) can function as a protein adsorbing layer. The second graft chain is preferably a polymer having many hydroxyl groups, and it is preferably a sugar chain (polysaccharides) or a modified product thereof, for example. Examples of the sugar chain (polysaccharides) include dextran, pullulan, agarose, and chitosan. The weight average molecular weight of a water-soluble polymer for forming the second graft chain may be 10,000 to 1,000,000 or so. As a method for forming the second graft layer, there is a method in which a functional group (epoxy group, glycidyl group, or the like), which has reactivity with the polymer having a hydroxyl group for forming the second graft chain, is introduced to the first graft chain, and the functional group is reacted with the polymer having a hydroxyl group on a surface of the porous polymer particles or inside the pores. As a solvent for the polymer having a hydroxyl group, any kind can be used as long as it can dissolve the polymer having a hydroxyl group. However, a hydrophilic solvent like water or alcohols (methanol, ethanol) is most general typically. Concentration of the polymer having a hydroxyl group to be dissolved in a solvent is preferably 5 to 20 mg/ml. A solution of the polymer having a hydroxyl group is impregnated inside the pores of the porous polymer particles. The impregnation can be carried out according to a method in which the porous polymer particles are added to a solution of the polymer having a hydroxyl group followed by stirring for a certain period of time. The stirring time may vary depending on the surface state of the porous polymer particles, but when it is between 1 and 12 hours, concentration of the polymer having a hydroxyl group reaches an equilibrium state inside and outside the porous polymer particles. After that, the reaction is initiated by a reaction catalyst, heating, or the like. Upon the completion of the reaction, the particles are separated by filtration. Subsequently, according to washing them with water, a hydrophilic organic solvent such as methanol or ethanol and removing the unreacted polymer having a hydroxyl group, medium for suspension, or the like, a separation material having the second graft chain with a hydroxyl group formed inside the pores of the porous polymer particles is obtained. The graft amount can be measured by a weight decrease of thermal degradation, densitometer, or the like.

The graft density of the second graft chain, which is calculated from the formula described above, is preferably 0.1 chain/nm$^2$ or less.

Introduction of ion exchange group

By introducing an ion exchange group and a ligand (protein A) to the coating layer containing graft chain via a hydroxyl group, the separation material can be used for ion exchange purification and affinity purification.

For introducing an ion exchange group, a compound containing a halogenated alkyl group can be used. Examples thereof include monohalogenocarbonic acid such as monohalogenoacetic acid or monohalogenopropionic acid, and a sodium salt thereof, and a halide of primary, secondary, or tertiary amine, or quaternary ammonium salt such as diethyl aminoethyl chloride, and a hydrochloric acid salt thereof. As a halide, bromide and chloride are preferable. Depending on the type of the compound containing a halogenated alkyl group, the added ion exchange group is decided. Use amount of the compound containing a halogenated alkyl group can be 0.2% or more relative to the weight of the particle to be added with an ion exchange group.

To promote the reaction for introducing an ion exchange group, it is effective to use an organic solvent. As for the organic solvent, alcohols such as ethanol, 1-propanol, 2-propanol, 1-butanol, isobutanol, 1-pentanol, or isopentanol can be used. Typically, after moisture is removed from the porous polymer particles and particles having coating layer by filtration in wet state or the like, the particles are impregnated in an aqueous alkali solution with predetermined concentration and then allowed to stand for a certain period of time. Typically, the reaction is carried out by adding a compound having halogenated alkyl group in a water-organic solvent mixture system. The reaction is preferably carried out for 0.5 to 12 hours under reflux at temperature of 40 to 90°C.

An amino group as a weakly basic group is obtained by reaction of secondary or tertiary aminohalogenide such as mono-, di-, or tri-alkylamino chloride, mono-, di-, or tri-alkanolamino chloride, mono (or di-)alkyl-mono (or di-)alkanolamino chloride (with the proviso that the conditions inside the ( ) are not present simultaneously). Use amount of those amines may be 0.2% by mass or more relative to the mass of the particles. The reaction condition is 0.5 to 12 hours at 40 to 90°C, for example.

As an example of a method for introducing a strongly basic quaternary ammonium group as an ion exchange group, a method in which a tertiary amino group is introduced first as described above, and the tertiary amino group is reacted with a compound containing a halogenated alkyl group of epichlorohydrin for conversion into a quaternary ammonium group can be mentioned. Quaternary amino halide such as quaternary ammonium chloride may be reacted with a composite like the primary to tertiary aminochlorides, which are described above.

As an example of a method for introducing a carboxyl group, which is a weak acidic group, as an ion exchange group, there is a method in which the reaction is carried out with monohalogenocarbonic acid such as monohalogenoacetic acid or monohalogenopropionic acid, or a salt thereof as the compound containing a halogenated alkyl group. Use amount of the carbonic acid or a salt thereof can be 0.2% by mass or more relative to the mass of the particles to which the ion exchange group is introduced.

As an example of a method for introducing a sulfonic acid, which is a strong acidic group, there is a method in which the composite is reacted with a glycidyl compound like epichlorohydrin, the composite is added to a saturated aqueous solution of sulfite or bisulfate like sodium sulfite and sodium bisulfite, and they are reacted at 30 to 90°C for 1 to 10 hours.

As another method for introducing an ion exchange group, there is a method in which the particles are reacted with 1,3-propane sultone under alkali atmosphere. Amount of 1.3-propane sultone can be 0.4% by mass or more relative to the mass of the particles. The reaction condition is 0.5 to 12 hours at 0 to 90°C, for example. In general, a method in which the porous polymer particles coated with a water-soluble polymer having a hydroxyl group are added to an aqueous solution of sodium hydroxide and reacted with a compound containing a halogenated alkyl group in a water-organic solvent mixture system can be mentioned. Use amount of the compound containing a halogenated alkyl group is 0.2% by mass or more relative to the mass of the water-soluble polymer, for example. The reaction is preferably carried out for 0.5 to 12 hours under reflux at temperature of 40 to 90°C.

Separation material

The separation material introduced with an ion exchange group is suitable for use in separation of a protein based on electrostatic interaction and affinity purification. For example, if the separation material is added to a mixture solution containing a protein, only the protein is adsorbed onto the separation material based on electrostatic interaction, and then the separation material is separated from the solution by filtration and added to an aqueous solution having high salt concentration; the protein adsorbed onto the separation material can be easily released and recovered. The separation material is also useful as a column filler for column chromatography. The column is typically provided with a tubular shape body and a separation material (column filler) filled in the tubular shape body.

As the biological polymer which can be separated by using the separation material according to an embodiment, a water-soluble material is preferable. Specific examples of the biological polymer include a protein like blood protein such as blood serum albumin and immunoglobulin, an enzyme present in a living body, a physiologically active protein material, DNA, and a peptide having physiological activity, which are produced by biotechnology. Molecular weight of the biological polymer is 2,000,000 or less, and more preferably 500,000 or less. Depending on the isoelectric point, ionization state, or the like of a protein, properties and conditions of the ion exchange group can be selected. With regard to this, reference can be made to the publication of Japanese Unexamined Patent Publication No. S60-169427, for example.

According to introduction of an ion exchange group and a ligand to inside of pores after forming a coating layer containing the first and second graft chains, characteristics having the advantage of each of the particles consisting of a natural polymer and a synthetic polymer can be exhibited in separation of a biological polymer like protein. This performance has not been exhibited according to a technique of a related art. Since the porous body to become a skeleton of the ion exchanger is a porous polymer particle that is prepared by the method described above, it has strong durability and alkali resistance. Furthermore, as the coating layer is formed of a polymer having a hydroxyl group, non-specific adsorption is unlikely to occur and adsorption and desorption of a protein is easy. Furthermore, also from the viewpoint of having high adsorption volume (dynamic adsorption volume) for a protein or the like at the same flow rate, the ion exchanger has a preferable property compared to an ion exchange resin of a related art.

Particle diameter of the separation material is preferably 10 to 300 μm in general. If it is used as a filler for preparative or industrial chromatography, particle diameter of the separation material is preferably 50 to 100 μm in order

to avoid an extreme increase in internal column pressure.

When protein separation is carried out with a column, the permeation rate of liquid like protein solution which permeates through the column is generally within a range of 400 cm/h or less. In this regard, the separation material according to an embodiment can be used with high adsorption capacity even at high permeation rate of liquid of 800 cm/h or more. Herein, the permeation rate of liquid means permeation rate of liquid when liquid is allowed to pass through after filling a filler in a $\phi 7.8 \times 300$ mm stainless column.

When used as a filler for column chromatography, the separation material of this embodiment can exhibit an excellent effect in terms of handling property, that is, almost no volume change inside a column without depending on the property of an effluent to be used.

The separation material of the present embodiment can be produced according to the aforementioned method. Namely, the method for producing the separation material of the present embodiment may include a step of forming, by atom transfer radical polymerization of a monomer including a radical polymerizable monomer having a hydroxyl group, a first graft chain which binds to the crosslinked polymer of porous polymer particles containing a crosslinked polymer containing a structural unit that is derived from a crosslinkable monomer having an aromatic group and two or more vinyl groups bonded to the aromatic group, and a step of binding a polymer having a hydroxyl group, which is different from the first graft chain, to the first graft chain.

EXAMPLES

Hereinbelow, the present invention is more specifically described in view of Examples. However, the present invention is not limited to those Examples.

1. Separation material

Example 1: Synthesis of porous polymer particle 1

In a 500 mL 3-neck flask, 16 g of divinyl benzene (DVB960) with purity of 96%, 6 g of an emulsifying agent (trade name: SPAN 80), and 0.64 g of benzoyl peroxide were added to an aqueous solution of polyvinyl alcohol (concentration: 0.5% by mass), and then the liquid was emulsified by using a Micro Process Server. In the formed emulsion, a monomer phase containing divinyl benzene, the emulsifying agent, and benzoyl peroxide was dispersed within the aqueous solution of polyvinyl alcohol as a continuous phase. The resulting emulsion was transferred to a flask, and, under heating in water bath at 80°C, stirred for 8 hours approximately with a stirrer. Particles produced by polymerization of divinyl benzene were collected by filtration and washed with acetone to obtain porous polymer particle 1.

Forming first graft layer

10 g of the porous polymer particle 1, 0.1 mmol of thioglycerol, and 1 mmol of $\alpha,\alpha,$'-azobisisobutyronitrile (AIBN) were added to 100 mL of DMF, and then the liquid was stirred for 12 hours at 70°C. After that, the particles collected from the liquid were washed with acetone. 10 g of the polymer particles after washing, 1 g of isobutyryl bromide, 50 g of DMF, and 0.5 g of triethylamine were mixed, and the mixture was stirred for 3 hours at room temperature. After that, by washing the particles collected from the liquid with acetone, particles introduced with a Br initiating group were obtained. 10 g of those particles were added to a reaction solution containing 13 g of glycerin monomethacrylate (GMA), 670 mg of copper dibromide, 335 mg of trisdimethlaminoethylamine, and 80 g of DMF, and nitrogen bubbling was performed. To the resultant, 200 g of ethanol in which 1,190 mg of ascorbic acid are dissolved were added, and polymerization of glycerin monomethacrylate by ATRP was carried out over 5 hours. Particles after the polymerization were filtered and washed with DMF to obtain porous polymer particles having a first graft layer which is formed of a graft chain that is a polymer of glycerin monomethacrylate. From the change in mass of the particles, ratio of the mass of the first graft layer relative to 1 g of the porous polymer particles (mg/g of particle, graft amount) was obtained. With regard to the molecular weight of the graft chain, 1 g of the particles were dispersed in 4 g of 3 N aqueous solution of sodium hydroxide and dispersed for 3 hours at 25°C, and then a supernatant in which the polymer of graft chain, which has been separated by hydrolysis, was recovered. Next, to this solution of the chain polymer, 1 M hydrochloric acid was added until the solution has pH of 7 for neutralization. As a result of calculating the number average molecular weight by GPC using the obtained aqueous solution, the number average molecular weight was found to be 12500. Using this number average molecular weight, graft density was calculated.

10 g of the resulting particles were dispersed in 350 g of 0.4 M aqueous solution of sodium hydroxide. 10 g of epichlorohydrin were added thereto and the solution was stirred for 12 hours at room temperature. After filtering, the particles were washed with heated 2% by mass aqueous solution of sodium dodecyl sulfate and water to obtain the particles that are introduced with an epoxy group.

Forming second graft layer

10 g of the porous polymer particles which have a first graft layer introduced with an epoxy group were added to 100 mL of aqueous solution of dextran (weight average molecular weight (Mw): 500000) with concentration of 10% by mass, and stirred for 1 hour. To the resultant, 100 mL of 1 M aqueous solution of sodium hydroxide were added followed by stirring for 18 hours. Thus, according to the reaction with an epoxy group, dextran was introduced as a graft chain which forms a second graft layer. Accordingly, a separation material having the first graft layer and the second graft layer was obtained. From the change in mass of the particles, ratio of the mass of the second graft layer relative to 1 g of the porous polymer particles (mg/g of particle, graft amount) was obtained.

Example 2

Porous polymer particle 2 was synthesized in the same manner as Example 1 except that the amount of SPAN 80 was changed to 7 g. Using the porous polymer particle 2, a separation material was produced in the same manner as Example 1.

Example 3

Porous polymer particle 3 was synthesized in the same manner as Example 1 except that the amount of SPAN 80 was changed to 8 g. Using the porous polymer particle 3, a separation material was produced in the same manner as Example 1.

Example 4

A separation material was produced in the same manner as Example 1 except that the first graft layer was formed by using hydroxyethyl methacrylate (HEMA) instead of glycerin monomethacrylate as a monomer.

Example 5

A separation material was produced in the same manner as Example 1 except that the first graft layer was formed by using hydroxyethyl acrylamide (HEAA) instead of glycerin monomethacrylate as a monomer.

Comparative Example 1

The particles before forming the second graft layer in Example 1 were used as a separation material.

Comparative Example 2

To 100 mL of aqueous solution of agarose (concentration: 2% by mass), 4 g of sodium hydroxide and 0.14 g of glycidyl phenyl ether were added, and, by reacting them for 12 hours at 70°C, an agarose (modified agarose) introduced with a phenyl group was generated. The generated modified agarose was re-precipitated with isopropyl alcohol followed by washing.

To aqueous solution of the modified agarose with concentration of 20 mg/mL, the porous polymer particle 1 was added at concentration which allows 70 mL of the aqueous solution of the modified agarose per gram of the particle. According to stirring for 24 hours at 55°C, the modified agarose was adsorbed onto the porous polymer particle 1. After the adsorption, the particles collected by filtration were washed with hot water. Adsorption amount of agarose onto the particles was calculated from concentration of the modified agarose in the filtered solution.

The particles of which surface including inside of fine pores is adsorbed with the modified agarose were added to an aqueous solution containing ethylene glycol diglycidyl ether with concentration of 0.64 M and 0.4 M sodium hydroxide with concentration of 0.4 M at concentration of 35 mL aqueous solution per gram of the particles, and then stirred for 24 hours at room temperature. After that, the particles were washed in order with heated aqueous solution of sodium dodecyl sulfate with concentration of 2% by mass and pure water. The particles after washing were directly used as a separation material.

Comparative Example 3

A commercially available ion exchange chromatography carrier (Capto DEAE (manufactured by GE Healthcare)) was directly used as a separation material (porous polymer particle 4).

Comparative Example 4: Synthesis of porous polymer particle 5

In a 500 mL 3-neck flask, 11.2 g of 2,3-dihydroxypropyl methacrylate, 4.8 g of ethylene glycol dimethacrylate, 5 g of SPAN 80, and 0.64 g of benzoyl peroxide were added to an aqueous solution of polyvinyl alcohol (concentration 0.5% by mass), and then the liquid was emulsified by using a Micro Process Server so as to form an emulsion in which a monomer phase is dispersed in the aqueous solution of polyvinyl alcohol as a continuous phase. The resulting emulsion was transferred to a flask, and, under heating in water bath at 80°C, stirred for 8 hours approximately with a stirrer. Particles produced by polymerization of 2,3-dihydroxypropyl methacrylate and ethylene glycol dimethacrylate were collected by filtration and washed with acetone to obtain porous polymer particle 5.

4 g of the porous polymer particle 4 after washing were added to 6 g of dextran solution, which has been obtained by dissolving 1 g of dextran (weight average molecular weight of 150000), 0.6 g of sodium hydroxide, and 0.15 g of sodium borohydride in distilled water so that the dextran solution is impregnated in pores of the porous polymer particle 4. The resulting porous polymer particle impregnated with dextran solution was added to 1 L toluene solution of ethyl cellulose with concentration of 1% by mass, and dispersed and suspended by stirring. To the resulting suspension, 5 mL of epichlorohydrin were added, and the suspension was stirred for 6 hours at 50°C to have crosslinking of dextran. Upon the completion of the reaction, the produced gel-like product was separated from the suspension by filtration, and washed in order with toluene, ethanol, and distilled water to obtain particles of a separation material. With regard to the introduction of an ion exchange group described below, an amino group was introduced in the same manner as Example 1.

Particle diameter of porous polymer particle

Particle diameter of each of the porous polymer particles 1 to 5 was measured by a flow type particle diameter measuring device, and average particle diameter and coefficient variation of the particle diameter (C.V. value) were calculated. The results are shown in Table 1.

Table 1

| Item | Average particle diameter ($\mu$m) | Particle diameter C.V (%) | Specific surface area ($m^2/g$) | Specific surface area* ($m^2/g$) |
|---|---|---|---|---|
| Porous polymer particle 1 | 102 | 12 | 89 | 62 |
| Porous polymer particle 2 | 110 | 11 | 76 | 53 |
| Porous polymer particle 3 | 108 | 8 | 35 | 25 |
| Porous polymer particle 4 | 92 | 32 | 93 | - |
| Porous polymer particle 5 | 89 | 34 | 78 | - |
| * After forming the first graft layer | | | | |

2. Evaluation

Evaluation of non-specific protein adsorption property

Phosphate buffer (pH 7.4) with concentration of 20 mg/mL containing BSA with concentration of 120 mg/mL and 0.5 M NaCl, was prepared in an amount of 50 mL. 0.5 g of the particles of each separation material of Examples and Comparative Examples was added thereto, and stirred for 24 hours at room temperature. After that, the supernatant collected by centrifuge was filtered and BSA concentration in the filtered solution was measured with a spectrophotometer. From the obtained BSA concentration, the amount of BSA adsorbed onto the separation material was calculated. The BSA concentration was determined from the absorbance at 280 nm by using a spectrophotometer. A case in which the adsorption amount is 5 mg or less was labeled "A", a case in which the adsorption amount is 5 to 10 mg was labeled "B", and a case in which the adsorption amount is 10 mg or more was labeled "C".

Introduction of ion exchange group

20 g of each separation material of Examples and Comparative Examples were dissolved in 100 mL aqueous solution in which diethylaminoethyl chloride hydrochloric acid salt is dissolved in a pre-determined amount, and stirred for 10 minutes at 70°C. 100 mL of 5 M aqueous solution of NaOH, which has been heated to 70°C, were added thereto and reacted for 1 hour. Upon the completion of the reaction, the particles were collected by filtration, and washed twice with a mixed liquid of water/ethanol (volume ratio of 8/2), to obtain a separation material having diethylaminoethyl (DEAE) group as an ion exchange group (DEAE modified separation material). Mode diameter in the pore size distribution and the specific surface area of the obtained separation material were measured by mercury press-in method.

Evaluation of column characteristics

Liquid permeability

DEAE modified separation material was dispersed in ethanol to prepare slurry with concentration of 30% by mass. The slurry was filled in a $\phi 7.8 \times 300$ mm stainless column over 15 minutes. After that, while changing the flow rate, water was flown through the column filled with a filler (filled column), relationship between the flow rate and column pressure was recorded, and the flow rate at the time point with column pressure of 0.3 MPa was measured.

Dynamic adsorption amount

20 mmol/L Tris-hydrochloric acid buffer (pH 8.0) was flown through the filled column in an amount of 10-column capacity. After that, 20 mmol/L Tris-hydrochloric acid buffer liquid containing BSA at concentration of 2 mg/mL were flown through the filled column, and the BSA concentration at the column exit was measured based on UV. The liquid was flown through until the BSA concentration at the column entrance and the BSA concentration at the column exit match each other. After that, dilution was made with 1 M NaCl Tris-hydrochloric acid buffer in an amount of 5-column capacity. Dynamic adsorption amount at 10% breakthrough was calculated by the following formula.

$$q_{10} = c_f F(t_{10} - t_0)/V_B q_{10}:$$

Dynamic binding capacity at 10% breakthrough (mg/mL of wet resin)
$c_f$: Concentration of injected BSA
F: Flow rate (mL/min)
$V_B$: Bed volume (mL)
$t_{10}$: Time at 10% breakthrough
$t_0$: Time for starting BSA injection

Evaluation of CIP characteristics

According to the same method as the evaluation of "Dynamic adsorption amount", BSA was allowed to adsorb onto the separation material in a column. After that, 0.5 M NaCl/0.05 M Tris-hydrochloric acid buffer (pH 8.0) was flown in an amount of 6-column capacity so that the BSA is released from the separation material. Furthermore, according to flow-through of 0.5 M aqueous solution of NaOH in an amount of 3-column capacity, the separation material was washed. This cycle of adsorption, releasing, and washing was carried out 100 times, and the decrease rate of BSA adsorption amount after 100 cycles relative to BSA adsorption amount at the first cycle was recorded. A case in which the decrease rate of BSA adsorption amount is 15% or less was labeled "A", a case in which the decrease rate of BSA adsorption amount is 15 to 40% was labeled "B", and a case in which the decrease rate of BSA adsorption amount is 40% or more was labeled "C".

Table 2

| Item | Porous polymer particle | First graft layer | Graft amount (mg/g of particle) | Graft density (chain/nm$^2$) | Second graft layer | Graft amount (mg/g of particle) | Graft density (chain/nm$^2$) |
|---|---|---|---|---|---|---|---|
| Ex. 1 | 1 | PGMA | 511 | 0.28 | Dextran | 95 | 0.023 |

(continued)

| Item | Porous polymer particle | First graft layer | Graft amount (mg/g of particle) | Graft density (chain/nm$^2$) | Second graft layer | Graft amount (mg/g of particle) | Graft density (chain/nm$^2$) |
|---|---|---|---|---|---|---|---|
| Ex. 2 | 2 | PGMA | 436 | 0.28 | Dextran | 72 | 0.020 |
| Ex. 3 | 3 | PGMA | 201 | 0.28 | Dextran | 53 | 0.020 |
| Ex. 4 | 1 | PHEMA | 528 | 0.28 | Dextran | 98 | 0.023 |
| Ex. 5 | 1 | PHEAA | 522 | 0.28 | Dextran | 92 | 0.022 |
| Comp. Ex. 1 | 1 | PGMA | 510 | 0.28 | - | - | - |
| Comp. Ex. 2 | 1 | Agarose | 325 | 0.024 | - | - | - |
| Comp. Ex. 3 | 4 | - | - | - | - | - | - |
| Comp. Ex. 4 | 5 | - | - | - | - | - | - |

Table 3

| Item | Mode diameter in pore size distribution ($\mu$m) | Specific surface area (m$^2$/g) | Liquid permeability (column flow rate) (cm/h) | Dynamic adsorption amount (mg/mL) | Non-specific adsorption (mg/mL) | CIP charact -eristics |
|---|---|---|---|---|---|---|
| Ex. 1 | 0.12 | 58 | 3420 | 189 | A | A |
| Ex. 2 | 0.25 | 49 | 2890 | 161 | A | A |
| Ex. 3 | 0.45 | 23 | 2520 | 74 | A | A |
| Ex. 4 | 0.11 | 60 | 3540 | 192 | A | A |
| Ex. 5 | 0.13 | 59 | 3670 | 177 | A | A |
| Comp. Ex. 1 | 0.13 | 60 | 3210 | 42 | A | A |
| Comp. Ex. 2 | 0.11 | 57 | 2870 | 110 | B | C |
| Comp. Ex. 3 | 0.09 | 60 | 730 | 43 | - | B |
| Comp. Ex. 4 | 0.12 | 51 | 320 | 32 | C | C |

As it can be also known from the results of Table 2 and Table 3, providing the first and second graft layers on a surface of the porous polymer particles can dramatically increase the dynamic adsorption amount, and, at the same time, makes it possible to synthesize a separation material which exhibits favorable liquid permeability due to having almost no non-specific adsorption.

**Claims**

**1.** A separation material comprising:

a porous polymer particle comprising a crosslinked polymer including a structural unit derived from a crosslinkable monomer having an aromatic group and two or more vinyl groups bonded to the aromatic group; and a coating layer coating at least part of the surface of the porous polymer,
wherein the coating layer comprises:

a first graft chain that is a polymer having a hydroxyl group and bonded to the crosslinked polymer; and
a second graft chain that is a polymer having a hydroxyl group, bonded to the first graft chain, and being different from the first graft chain.

2. The separation material according to claim 1, wherein the first graft chain contains a structural unit derived from a radical polymerizable monomer having a hydroxyl group.

3. The separation material according to claim 2, wherein the first graft chain is a polymer formed by atom transfer radical polymerization of monomers including the radical polymerizable monomer having a hydroxyl group.

4. The separation material according to any one of claims 1 to 3, wherein the second graft chain is a sugar chain or a modified product thereof.

5. The separation material according to any one of claims 1 to 4, wherein the mode diameter in the pore size distribution of the separation material is 0.05 to 0.6 $\mu$m.

6. The separation material according to any one of claims 1 to 5, wherein the coefficient variation of the particle diameter of the separation material is 5 to 15%.

7. The separation material according to any one of claims 1 to 6, wherein the graft density of the first graft chain is 0.1 chain/nm$^2$ or more, and the graft density of the second graft chain is 0.1 chain/nm$^2$ or less.

8. A column comprising the separation material according to any one of claims 1 to 7.

9. A method for producing a separation material comprising:

forming a first graft chain bonded to a crosslinked polymer of a porous polymer particle comprising the crosslinked polymer, the crosslinked polymer containing a structural unit derived from a crosslinkable monomer having an aromatic group and two or more vinyl groups bonded to the aromatic group, by atom transfer radical polymerization of monomers including a radical polymerizable monomer having a hydroxyl group; and
binding a polymer having a hydroxyl group and being different from the first graft chain, to the first graft chain.

## INTERNATIONAL SEARCH REPORT

| International application No. |
| --- |
| PCT/JP2017/009768 |

### A. CLASSIFICATION OF SUBJECT MATTER

*B01J20/281*(2006.01)i, *B01D15/38*(2006.01)i, *B01J20/26*(2006.01)i, *G01N30/88*(2006.01)i

According to International Patent Classification (IPC) or to both national classification and IPC

### B. FIELDS SEARCHED

Minimum documentation searched (classification system followed by classification symbols)
B01J20/281, B01D15/38, B01J20/26, G01N30/88

Documentation searched other than minimum documentation to the extent that such documents are included in the fields searched
Jitsuyo Shinan Koho        1922–1996    Jitsuyo Shinan Toroku Koho    1996–2017
Kokai Jitsuyo Shinan Koho    1971–2017    Toroku Jitsuyo Shinan Koho    1994–2017

Electronic data base consulted during the international search (name of data base and, where practicable, search terms used)
JSTPlus/JMEDPlus/JST7580(JDreamIII)

### C. DOCUMENTS CONSIDERED TO BE RELEVANT

| Category* | Citation of document, with indication, where appropriate, of the relevant passages | Relevant to claim No. |
| --- | --- | --- |
| A | JP 2001-524878 A (Renal Tech International LLC), 04 December 2001 (04.12.2001), & US 6114466 A & WO 1999/039823 A1 & EP 998350 A1 & CA 2285942 A1 & CN 1252739 A | 1-9 |
| A | JP 2015-515633 A (GE Healthcare Bio-Sciences AB.), 28 May 2015 (28.05.2015), & US 2015/0133618 A1 & WO 2013/162449 A1 & EP 2841177 A1 & CN 104245078 A | 1-9 |
| A | JP 61-283345 A (Denki Kagaku Kogyo Kabushiki Kaisha), 13 December 1986 (13.12.1986), (Family: none) | 1-9 |

☒ Further documents are listed in the continuation of Box C.        ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 12 April 2017 (12.04.17) | 25 April 2017 (25.04.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

International application No.

PCT/JP2017/009768

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2-286173 A  (Terumo Corp.),<br>26 November 1990 (26.11.1990),<br>(Family: none) | 1-9 |
| A | JP 63-33339 A  (Asahi Chemical Industry Co.,<br>Ltd.),<br>13 February 1988 (13.02.1988),<br>(Family: none) | 1-9 |
| A | JP 2010-529210 A  (Merck Patent GmbH),<br>26 August 2010 (26.08.2010),<br>& US 2009/0326081 A1    & WO 2007/144118 A1<br>& EP 2027163 A1        & AT 474859 T | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4965289 A
- US 4335017 A
- US 4336161 A
- US 3966489 A
- JP HI254247 B
- US 5114577 A
- JP 2009244067 A
- JP S60169427 B